# DEMANDE DE BREVET EUROPEEN

(11) **EP 4 610 333 A1**
(43) Date de publication de la demande: **03.09.2025**
(21) Numéro de dépôt: 25160992.1
(22) Date de dépôt: 28.02.2025
(51) Int. Cl.: C10B 53/02, C10B 57/10, C10L 9/08, C10B 49/04, C10B 49/06, C10B 57/14, C10B 57/02, C10B 1/04

(54) **INSTALLATION ET PROCÉDÉ DE CARBONISATION POUR PRODUIRE DU CHARBON DE BOIS**

(30) Priorité: 28.02.2024 FR 2401981
(71) Demandeur: Pyrogeny, 40270 Maurrin (FR)
(72) Inventeur: DHUICQ, Thierry, 40270 MAURRIN (FR)
(74) Mandataire: Plasseraud IP

(57) **Abrégé**

La présente invention concerne une installation de carbonisation pour la fabrication de charbon de bois à partir d'au moins une matière lignocellulosique. Selon l'invention, cette installation comprend un réacteur (1) vertical comportant une chambre à l'intérieur de laquelle sont délimitées quatre zones de traitement superposées, le réacteur définissant un chemin d'écoulement entre les deux extrémités de ladite chambre, le long duquel ladite au moins une matière lignocellulosique subit un processus de carbonisation au fur et à mesure qu'elles progressent au travers des différentes zones, une première zone de séchage, placée à l'extrémité supérieure dudit réacteur, une deuxième zone dite de torréfaction, une troisième zone dite de pyrolyse configurée pour réaliser la pyrolyse de la ou des matières provenant de la zone dite de torréfaction, et une quatrième zone dite de refroidissement du charbon produit, ledit réacteur comportant un dispositif d'aspiration pour générer et maintenir une dépression dans cette chambre de sorte à évacuer les gaz formés dans le réacteur par au moins une ouverture dite d'extraction et ledit réacteur comportant également une ouverture de réinjection, reliée à un circuit de réinjection d'au moins une partie des gaz formés dans le réacteur et évacués par ladite au moins une ouverture d'extraction, lequel est configuré pour abaisser la température de ces gaz à une température d'extraction du charbon.

## Description

### Domaine technique

La présente invention concerne une installation et un procédé de carbonisation en continu d'une ou plusieurs matières ligno-cellulosiques pour produire du charbon.

### Technique antérieure

Le charbon de bois végétal, plus communément appelé biochar, est un résidu solide riche en carbone.

Le charbon de bois végétal participe à la réduction de CO₂ présent dans l'atmosphère en le piégeant pendant plusieurs siècles en fonction de sa qualité.

Par ailleurs, le biochar présente d'excellentes opportunités en tant qu'amendement et stabilisateur de sols, notamment pour l'agriculture biologique.

Il présente en effet une structure poreuse et des microcavités permettant d'absorber l'eau et les nutriments.

Il existe toutefois un obstacle au développement du biochar qui est lié à son coût de production relativement élevé.

Ce prix élevé tient à plusieurs facteurs incluant notamment l'échelle du réacteur, le coût de sa maintenance, le temps de séjour requis de la matière dans le réacteur et l'efficacité énergétique du procédé mis en œuvre.

On connaît en effet différents procédés pour la production de charbon de bois.

Ces procédés incluent une étape de pyrolyse au cours de laquelle sont formées trois phases distinctes par leurs températures et compositions :
- une phase solide (biochar),
- une phase liquide (huile de pyrolyse),
- une phase gazeuse combustible et non combustible.

La proportion entre ces trois phases dépend essentiellement des principaux paramètres opératoires, notamment de la température, du temps de séjour et de la vitesse de chauffage.

Il est notable toutefois de constater que ces procédés de l'état de l'art présentent de nombreux inconvénients.

Tout d'abord, il est difficile d'utiliser du bois humide et le séchage préalable du bois, généralement sur des durées relativement longues, est un prérequis, pour atteindre un taux d'humidité souhaité, typiquement inférieur à 40% en poids.

Ce séchage peut être réalisé par exemple dans un séchoir, ce qui nécessite néanmoins une dépense énergétique importante.

Par ailleurs, les dimensions restreintes des fours de l'état de l'art rendent nécessaire la pré-découpe de la ou des matières ligno-cellulosiques.

Des copeaux de bois sont ainsi typiquement mis en œuvre avec comme avantage, une réduction du temps de séjour dans le réacteur. Cette réduction est liée à un temps de chauffage plus court.

Cependant, on observe que le transfert de chaleur dans le cœur du foyer est lent car ce large volume de matière totalement désordonnée présente une faible conductivité thermique et une faible perméabilité aux gaz.

Il est donc difficile d'obtenir une répartition homogène des températures de carbonisation dans le réacteur, ce qui entraîne la formation de charbon dont la qualité est inhomogène.

Par ailleurs, les gaz issus de la pyrolyse sont généralement brûlés sans aucune valorisation de la phase liquide.

Il existe un besoin pressant pour une installation de carbonisation d'une ou plusieurs matières ligno-cellulosiques, dont la conception originale permette de surmonter les inconvénients ci-dessus exposés.

### Objet de l'invention

La présente invention vise une installation et un procédé de carbonisation en continu, simple dans leur conception et dans leur mode opératoire, pour la production d'un charbon de bois d'excellente qualité, répondant aux inconvénients ci-dessus mentionnés.

Un autre objet de la présente invention est une telle installation de carbonisation en continu permettant de valoriser la phase liquide de la pyrolyse.

Encore un autre objet de la présente invention est une telle installation de carbonisation en continu autorisant une valorisation énergétique (thermique et électrique) des gaz de pyrolyse issus du réacteur.

Encore un autre objet de la présente invention est une telle installation et un tel procédé de carbonisation en continu plus respectueuse de l'environnement.

### Exposé de l'invention

A cet effet, l'invention concerne une installation de carbonisation en continu pour la fabrication de charbon de bois à partir d'une ou plusieurs matières lignocellulosiques.

Selon l'invention, cette installation de carbonisation comprend un réacteur vertical comportant une chambre à l'intérieur de laquelle sont délimitées quatre zones de traitement superposées, le réacteur définissant un chemin d'écoulement entre les deux extrémités de ladite chambre, le long duquel ladite ou lesdites matières ligno-cellulosiques subissent un processus de carbonisation au fur et à mesure qu'elles progressent au travers des différentes zones, une première de ces zones, dite de séchage, placée à l'extrémité supérieure dudit réacteur comportant un dispositif de séchage configuré pour porter la température de la ou des matières lignocellulosiques introduites dans le réacteur à une température de séchage, une deuxième zone dite de torréfaction étant configurée pour réaliser la torréfaction de la ou des matières séchées issues de la zone de séchage placée en amont, une troisième zone dite de pyrolyse étant configurée pour réaliser la pyrolyse de la ou des matières provenant de la zone dite de torréfaction, et une quatrième zone dite de refroidissement du charbon produit, placée à l'extrémité inférieure du réacteur vertical,
- ledit réacteur comportant un dispositif d'aspiration pour maintenir ladite chambre en dépression de sorte à évacuer les gaz formés dans le réacteur par au moins une ouverture dite d'extraction,
- ledit réacteur comportant également une ouverture à son extrémité inférieure, dite ouverture de réinjection, reliée à un circuit de réinjection d'au moins une partie des gaz formés dans le réacteur et évacués par ladite au moins une ouverture d'extraction, ledit circuit de réinjection, extérieur au réacteur, étant configuré pour refroidir et abaisser la température de ces gaz à une température inférieure ou égale à 100°C, de préférence inférieure ou égale à 70°C et encore mieux inférieure ou égale à 50°C, avant leur réinjection pour participer au refroidissement du charbon produit de sorte à amener ce dernier à une température d'extraction du charbon, et
- ledit réacteur comprenant une ou plusieurs ouvertures placées dans la paroi périphérique du réacteur, ladite installation comporte des moyens pour introduire de manière régulée de l'oxygène au travers desdites ouvertures dans le réacteur pour réaliser la pyrolyse.

Avantageusement, on observe que la température d'extraction du charbon en sortie du réacteur vertical est inférieure à 100°C, encore mieux, inférieure à 70°C, et de manière encore plus préférentielle comprise entre 30°C et 50°C, excluant la combustion spontanée du charbon produit au contact de l'oxygène de l'air.

De plus, on constate qu'un tel réacteur permet d'obtenir un charbon dont la teneur en carbone non volatil est au minimum de 90% et dont la fraction massique de l'eau est comprise entre 2,5% et 5%.

La mise en dépression de la chambre permet d'empêcher la libération de gaz potentiellement dangereux pour la santé des opérateurs à l'extérieur du réacteur vertical. Ce fonctionnement en dépression de la chambre permet également de préserver les différents éléments de l'installation du contact sous pression avec des gaz corrosifs, par exemple d'acide acétique et formique. En particulier, la dégradation des joints d'étanchéité de l'installation par ces gaz corrosifs pourrait autrement résulter en une libération de gaz dans l'installation qui, au contact de l'air, pourraient s'enflammer et même exploser.

De manière avantageuse, la pyrolyse est générée et entretenue par une gestion régulée d'apport d'oxygène. Contrairement aux installations de l'état de l'art, il n'y a donc aucun contact avec des gaz chauds pour générer la pyrolyse.

De manière avantageuse, le réacteur de la présente invention permet le traitement de matières ligno-cellulosiques se présentant sous forme de bûches de bois.

De préférence, ces bûches de bois présentent des dimensions maximales : longueur de 25 cm et épaisseur de 10 cm, de préférence une longueur de 20 cm et une épaisseur de 10 cm, et de manière particulièrement avantageuse, une longueur de 20 cm et une épaisseur de 8 cm.

La zone dite de refroidissement est configurée pour assurer un refroidissement naturel du charbon produit lors de sa sortie du réacteur. La réinjection d'au moins une partie des gaz formés dans le réacteur après le refroidissement de ces derniers sur le circuit de réinjection, permet non seulement d'accélérer le refroidissement du charbon produit dans le réacteur mais apporte également une partie des besoins calorifiques nécessaires à l'étape de pyrolyse. En effet, la réinjection pilotée des gaz épurés et refroidis vient avantageusement soutenir l'exothermie dans la zone de pyrolyse, ce qui améliore le rendement (économie de bois), ou le ratio bois/biochar.

On minimise, voire on évite, ainsi l'introduction d'air (oxygène) susceptible d'enflammer le charbon produit.

Selon un mode de réalisation particulier de cette installation de carbonisation, ledit réacteur comporte au moins un ventilateur pour faire circuler de l'air à contre-courant du chemin d'écoulement, cet air étant introduit par la ou lesdites ouvertures placées dans la paroi latérale du réacteur.

De préférence, chacune de ces ouvertures comprend une buse pour assurer l'apport d'air dans la zone de pyrolyse du charbon et un ventilateur pour faire circuler l'air à contre-courant du chemin d'écoulement.

Selon un autre mode de réalisation particulier de cette installation de carbonisation, ledit réacteur comporte une ouverture à son extrémité inférieure, dite ouverture de réinjection, placée dans la paroi périphérique du réacteur, et reliée à un circuit de réinjection d'au moins une partie des gaz formés dans le réacteur après traitement, ledit circuit de réinjection comprenant une installation de fourniture d'eau chaude comprenant un circuit thermodynamique comportant un ou plusieurs condenseurs d'échange de chaleur avec une source chaude pour le transfert de chaleur à un circuit d'eau chaude, ladite source chaude comprenant un circuit dans lequel circule au moins une partie des gaz formés dans le réacteur et provenant directement du réacteur.

Ces gaz formés dans le réacteur sont essentiellement des gaz bruts issus de la pyrolyse de la ou des matières ligno-cellulosiques séchées dans la partie supérieure du réacteur.

Selon encore un autre mode de réalisation particulier de cette installation de carbonisation, ledit circuit de réinjection comprend au moins un dispositif de filtration configuré pour épurer ladite au moins une partie des gaz formés dans le réacteur ainsi qu'un ventilateur pour faire circuler ladite au moins une partie des gaz ainsi épurés vers ladite ouverture de réinjection de sorte qu'elle circule en contre-courant dans le réacteur.

Selon encore un autre mode de réalisation particulier de cette installation de carbonisation, ledit circuit thermodynamique comprenant un échangeur évaporateur associé à une source froide, ladite source froide comprend un dispositif aéro-réfrigérant pourvu d'au moins un ventilateur.

Une boucle d'eau chaude permet avantageusement de réutiliser l'énergie thermique du ou des condenseurs pour satisfaire les besoins d'un séchoir.

De manière avantageuse, le refroidissement du ou des condenseurs par une boucle d'eau chaude avec un aéroréfrigérant permet d'éviter l'utilisation d'une réserve d'eau. En effet, ce dernier type de configuration implique des contraintes opérationnelles supplémentaires.

L'un des risques est sanitaire. La croissance des légionelles dans l'eau est effective entre 20°C et 50°C avec un pH optimal de croissance de 6,9. Une réserve d'eau à l'air libre représente donc un risque de légionellose.

Une autre contrainte réside dans l'utilisation d'une piscine, source d'impact environnemental liée à une consommation d'eau non négligeable. Dans un contexte où de nombreuses régions de France doivent faire face à de longs épisodes de sécheresse au cours de l'année, la solution mise en œuvre dans la présente invention est plus respectueuse de l'environnement.

Selon encore un autre mode de réalisation particulier de cette installation de carbonisation, ledit dispositif aéro-réfrigérant comporte un dispositif de brumisation ou de projection de gouttelettes d'eau ainsi qu'un dispositif de désinfection bactériologique pour désinfecter le liquide à brumiser ou à projeter sous forme de gouttelettes et éviter ainsi tout risque d'infection bactériologique. Il est connu que la brumisation d'eau ou la projection de gouttelettes d'eau dans l'air permet d'améliorer le refroidissement du fluide caloporteur à refroidir.

Le dispositif de désinfection bactériologique peut comporter par exemple une source de rayons ultra-violets configurée pour désinfecter l'eau à distribuer, laquelle est reçue dans une chambre de traitement avant sa distribution.

Par exemple, cette source de rayonnement ultraviolet peut comporter des sources ponctuelles telles que des LEDs UV.

Selon encore un autre mode de réalisation particulier de cette installation de carbonisation, ledit réacteur comprend un ou plusieurs dispositifs de mesure de pression, ledit dispositif d'aspiration comportant au moins un ventilateur à vitesse variable relié à ce ou ces dispositifs de mesure pour la régulation de la pression dans la chambre.

Selon encore un autre mode de réalisation particulier de cette installation de carbonisation, elle comporte un séchoir pour sécher, en partie, la ou les matières ligno-cellulosiques avant leur introduction dans ledit réacteur, une partie du circuit d'eau chaude passant par ce séchoir.

Selon encore un autre mode de réalisation particulier de cette installation de carbonisation, elle comporte un séchoir configuré pour sécher la matière ou les matières ligno-cellulosiques de sorte qu'elles présentent une humidité relative comprise en 2% en poids et 25% en poids, de préférence comprise entre 10% en poids et 15% en poids, et de manière encore plus préférentielle égale à 15% en poids. Ce séchoir peut comporter au moins un capteur pour déterminer le taux d'humidité de la ou desdites matières ligno-cellulosiques et envoyer une alarme lorsque ledit taux est mesuré inférieur ou égal à une valeur seuil telle qu'une valeur de 15% en poids.

Selon encore un autre mode de réalisation particulier de cette installation de carbonisation, ladite ouverture d'extraction est reliée à un circuit de valorisation d'une partie desdits gaz formés dans ledit réacteur, ledit circuit de valorisation comportant un ou plusieurs condenseurs d'échange de chaleur avec une source chaude pour le transfert de chaleur à un circuit d'eau chaude et un échangeur évaporateur associé à une source froide, ladite source chaude comprenant un circuit dans lequel circule au moins une partie des gaz formés dans le réacteur et provenant directement de ce réacteur, ledit circuit de valorisation comportant des moyens de récupération des produits liquides condensables tels que des huiles ou des dérivés d'huile (esters) présents dans ladite au moins une partie des gaz formés dans le réacteur.

De préférence, la source froide comprend un dispositif aéro-réfrigérant pourvu d'un ou plusieurs ventilateurs.

L'installation de l'invention permet ainsi de condenser les produits de pyrolyse liquide avec sélection ultérieure. La partie restante des produits de pyrolyse liquide contient des acides organiques, des alcools, qui sont également extraits par d'autres moyens d'extraction appropriés.

Selon encore un autre mode de réalisation particulier de cette installation de carbonisation, ladite ouverture d'extraction est reliée à un circuit de valorisation d'une partie desdits gaz formés dans ledit réacteur après traitement, ledit circuit de valorisation comprenant un ou plusieurs moteurs à gaz tels qu'un ou plusieurs groupes électrogène à gaz, et/ou une chaudière de combustion pour brûler ladite au moins une partie desdits gaz formés dans ledit réacteur.

De préférence, cette chaudière de combustion comprend un port de sortie des gaz de combustion formés dans la chaudière, lequel est relié à un dispositif de récupération de chaleur.

De préférence, le moteur à gaz comportant un port de sortie des fumées d'échappement, ce port de sortie est également relié à un dispositif de récupération de chaleur pour récupérer de la chaleur sur les fumées d'échappement du moteur. L'énergie des fumées de moteur à gaz qui ressortent à plus de 450°C peut ainsi être exploitée.

En fonction de la température de la chaleur demandée, une valorisation électrique additionnelle via une machine à cycle organique de Rankine (ORC) est possible.

A titre d'exemple, ce dispositif de récupération de chaleur peut être un échangeur de chaleur permettant d'apporter de l'énergie calorifique au séchoir. Avantageusement, ce moteur à gaz est connecté à un alternateur afin de produire de l'électricité.

Pour leur part, les fumées issues de la combustion de ladite au moins une partie desdits gaz formés dans le réacteur, peuvent être adressées à une unité de récupération de chaleur alimentée en eau, ladite unité de récupération de chaleur étant configurée pour chauffer ladite eau par récupération de la chaleur desdites fumées afin de produire de la vapeur et alimenter au moins une turbine à vapeur pour produire de l'électricité.

Selon encore un autre mode de réalisation particulier de cette installation de carbonisation, ledit circuit de valorisation comporte au moins un dispositif de filtration configuré pour épurer ladite au moins une partie des gaz formés dans le réacteur et un ou plusieurs condenseurs. En amont du moteur à gaz, ladite au moins une partie des gaz formés dans le réacteur doit être traitée. En effet, elle doit respecter les données suivantes :
∘ La pression en entrée de la rampe gaz doit être comprise entre 120 mbar et 200 mbar,
∘ L'humidité relative doit être inférieure ou égale à 80%,
∘ La température doit être comprise entre 10°C et 40°C,
∘ Aucun goudron n'est accepté par les machines, ceux-ci doivent donc être préalablement traités.

Selon encore un autre mode de réalisation particulier de cette installation de carbonisation, ledit réacteur comporte un sas d'introduction de la ou les matières lignocellulosiques et un sas d'évacuation du charbon produit, ainsi qu'un dispositif de contrôle pour ouvrir en alternance lesdits sas.

Une telle configuration des sas permet d'introduire la ou les matières lignocellulosiques et d'évacuer le charbon produit sans compromettre la dépression générée dans la chambre.

De préférence, ce dispositif de contrôle comporte également un capteur tel qu'une jauge de niveau pour détecter un niveau faible de matière à traiter à l'extrémité supérieure du réacteur, ledit capteur émettant un signal de niveau.

De plus, le dispositif de contrôle peut commander un dispositif d'approvisionnement en matière lignocellulosique tel qu'un contenant ou une bande transporteuse pour approvisionner automatiquement l'extrémité supérieure du réacteur en fonction du signal de niveau émis par le capteur.

La gestion de l'ouverture alternée des sas est avantageusement définie par le temps plus ou moins long de la pyrolyse qui dépend du niveau de température choisie.

Selon encore un autre mode de réalisation particulier de cette installation de carbonisation, ledit réacteur comporte une ou plusieurs ouvertures, dites ouvertures d'injection, pratiquées dans la paroi périphérique du réacteur, chaque ouverture d'injection comprenant une buse pour assurer l'apport d'air dans la zone de combustion du charbon et un ventilateur pour faire circuler l'air à contre-courant du chemin d'écoulement.

La dépression générée dans le réacteur étant régulée, l'apport ou la gestion de l'air conditionne la température de pyrolyse. Une vanne pilotée permet avantageusement de gérer les entrées d'air pour contrôler la quantité d'air rentrant dans la zone de pyrolyse en fonction de la qualité du charbon à produire. Une autre vanne pilotée permet de gérer avantageusement les gaz de réinjection pour refroidir le charbon produit et soutenir l'exothermie dans la zone de pyrolyse.

Selon encore un autre mode de réalisation particulier de cette installation de carbonisation, le dispositif de séchage est configuré pour porter la température de ladite ou desdites matières lignocellulosiques introduites dans le réacteur à une température de séchage comprise entre 100°C et 200°C, et encore mieux entre 100°C et 120°C.

Selon encore un autre mode de réalisation particulier de cette installation de carbonisation, ladite zone de torréfaction est configurée pour porter la température de ladite ou desdites matières ainsi séchées à une température comprise entre 200°C et 300°C, et encore mieux entre 200°C et 250°C.

Selon encore un autre mode de réalisation particulier de cette installation de carbonisation, ce dispositif de pyrolyse est configuré pour porter la température de ladite ou desdites des matières provenant de la zone dite de torréfaction, à une température comprise entre 400°C et 800°C.

La présente invention concerne également un procédé de carbonisation en continue d'une ou plusieurs matières lignocellulosiques pour former du charbon dans lequel :
- on introduit ladite ou lesdites matières lignocellulosiques dans un réacteur vertical comportant une chambre à l'intérieur de laquelle sont délimitées des zones de traitement superposées, le réacteur définissant un chemin d'écoulement entre les deux extrémités de ladite chambre, le long duquel ladite ou lesdites matières ligno-cellulosiques subissent un processus de carbonisation au fur et à mesure qu'elles progressent au travers des différentes zones, une première desdites zones, dite de séchage, placée à l'extrémité supérieure dudit réacteur comportant un dispositif de séchage configuré pour porter la température de la ou des matières lignocellulosiques introduites dans le réacteur à une température de séchage, une deuxième zone dite de torréfaction étant configurée pour réaliser la torréfaction de la ou des matières séchées issues de la zone de séchage placée en amont, une troisième zone dite de pyrolyse étant configurée pour réaliser la pyrolyse de la ou des matières provenant de la zone dite de torréfaction, et une quatrième zone dite de refroidissement du charbon produit, placée à l'extrémité inférieure du réacteur vertical,
- on régule la pression dans le réacteur pour maintenir ladite chambre en dépression,
- les gaz formés dans le réacteur étant évacués par au moins une ouverture d'extraction, on récupère lesdits gaz, on abaisse leur température à une température inférieure ou égale à 100°C, de préférence inférieure ou égale à 70°C et encore mieux inférieure ou égale à 50°C, et on les réinjecte dans la partie inférieure dudit réacteur pour participer au refroidissement du charbon produit de sorte à amener ce dernier à une température d'extraction, et
- le réacteur comportant une ou plusieurs ouvertures placées dans sa paroi périphérique, la pyrolyse est réalisée par un apport régulé d'oxygène.

De manière avantageuse, l'installation fonctionne donc en gestion régulée d'apport d'oxygène. Contrairement aux installations de l'état de l'art, il n'y a donc aucun contact avec des gaz chauds pour obtenir la pyrolyse.

De préférence, on injecte de l'air dans la zone de pyrolyse au travers de chaque ouverture en faisant circuler cet air à contre-courant du chemin d'écoulement au moyen d'au moins un ventilateur.

On pourra réaliser en sortie du réacteur, une étape de conditionnement du charbon produit, éventuellement précédée d'une opération de tamisage.

De manière avantageuse, la régulation de la pression de la chambre pour maintenir celle-ci en dépression permet d'évacuer les gaz selon les pressions mesurées en temps réel. L'installation comporte donc un ou plusieurs capteurs de pression pour assurer ces mesures en temps réel.

De manière avantageuse, l'abaissement de température est réalisé par transfert de chaleur des gaz chauds issus du réacteur à un circuit d'eau chaude, ledit circuit d'eau chaude passant dans un séchoir pour sécher partiellement ladite ou lesdites matières ligno-cellulosiques avant leur introduction dans ledit réacteur.

De préférence, on analyse la teneur en carbone du charbon produit et on ajuste la dépression générée dans le réacteur et/ou la température de pyrolyse en fonction de la teneur en carbone du charbon produit.

De manière préférentielle, on introduit dans ledit réacteur une ou plusieurs matières ligno-cellulosiques se présentant sous la forme de bûches de bois ayant des dimensions maximales, longueur de l'ordre de 25 cm et épaisseur de l'ordre de 10 cm, de préférence une longueur de l'ordre de 20 cm et une épaisseur de l'ordre 10 cm et dont l'humidité est égale à 15% maximum en poids, de préférence comprise entre 10% en poids et 15% en poids.

### Brève description des dessins

D'autres avantages, buts et caractéristiques particulières de la présente invention ressortiront de la description qui va suivre, faite, dans un but explicatif et nullement limitatif, en regard des dessins annexés, dans lesquels :
Fig. 1

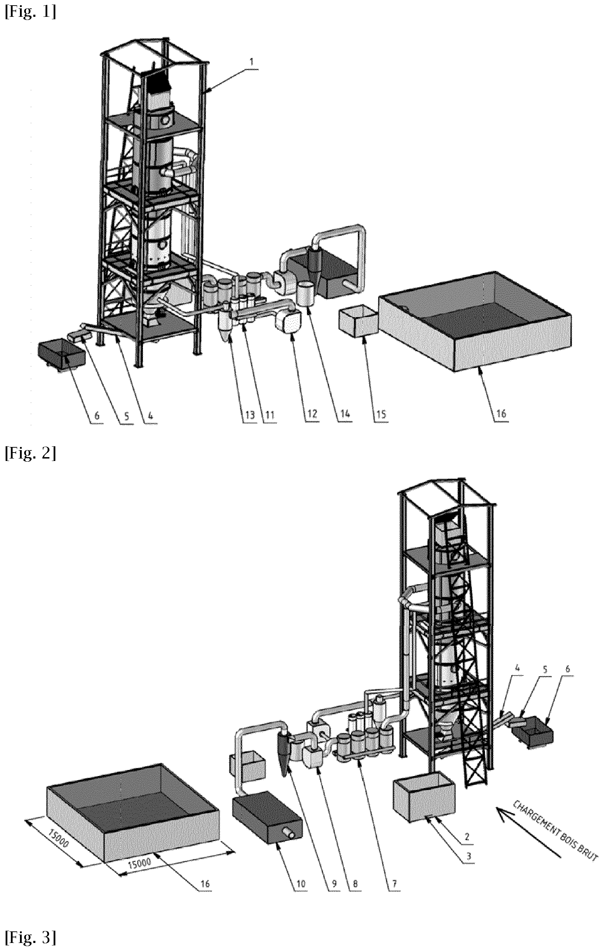

   [Fig. 1] est une vue en perspective avant d'une installation de carbonisation d'une charge de bois selon un mode de réalisation particulier de la présente invention, cette vue montrant le circuit de réinjection d'une partie des gaz formés dans le réacteur de l'installation ;
Fig. 2
   [Fig. 2] est une vue en perspective arrière de l'installation de carbonisation de la Fig. 1 montrant le circuit de valorisation d'une partie des gaz formés dans le réacteur de l'installation ;
Fig. 3
   [Fig. 3] est une représentation schématique d'une installation de carbonisation d'une charge de bois selon un autre mode de réalisation particulier de la présente invention, laquelle montre le circuit de réinjection d'une partie des gaz issus du réacteur vertical ainsi que le circuit d'eau chaude alimentant un séchoir ;
Fig. 4

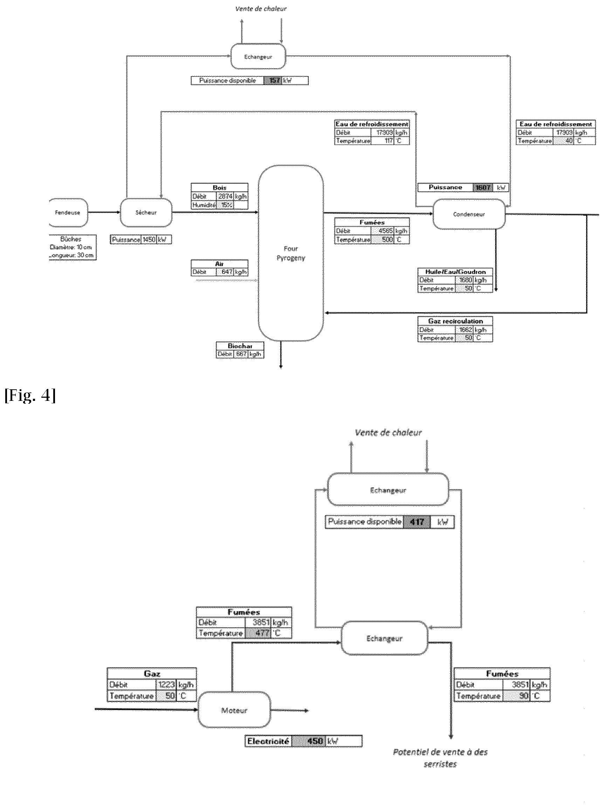

   [Fig. 4] est une représentation schématique d'un mode de réalisation avantageux de la partie avale de l'installation de carbonisation de la Fig. 3 montrant une partie du circuit de valorisation dans lequel les gaz traités alimentent un moteur à gaz;

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Tout d'abord, on note que les figures ne sont pas à l'échelle.

Dans la description qui va suivre, les termes « supérieur », « inférieur » et « latéral » sont utilisés par référence à l'orientation physique verticale du réacteur de l'invention lorsque ce dernier est placé sur un support plan horizontal. Les termes « entrée », « sortie », « amont » et « aval » sont utilisés en référence à la direction de cheminement de la ou des matières ligno-cellulosiques dans le réacteur vertical de l'invention, qui se fait de haut en bas.

Les Figures 1 et 2 représentent schématiquement une installation de carbonisation d'une ou plusieurs matières ligno-cellulosiques pour la production de charbon de bois selon un mode de réalisation particulier de la présente invention.

Cette installation de carbonisation comporte un réacteur 1 alimenté par une voie avec une charge solide constituée d'une ou plusieurs matières ligno-cellulosiques.

Elle comporte également un poste de contrôle 2 ainsi qu'une centrale hydraulique 3.

Le réacteur 1 vertical comporte une chambre à l'intérieur de laquelle sont délimitées quatre zones de traitement superposées, le réacteur définissant un chemin d'écoulement entre les deux extrémités opposées de cette chambre, le long duquel cette charge subit un processus de carbonisation au fur et à mesure qu'elle progresse au travers des différentes zones du réacteur.

La première zone dite de séchage est placée à l'extrémité supérieure de ce réacteur 1 vertical et comporte un dispositif de séchage (non représenté) configuré pour porter la température de la ou des matières lignocellulosiques introduites à l'entrée du réacteur 1 à une température de séchage.

Cette température de séchage peut être comprise entre 100°C et 200°C et plus particulièrement entre 100°C et 120°C.

La deuxième zone dite de torréfaction comporte un dispositif de torréfaction configuré pour réaliser la torréfaction de la ou des matières séchées issues de la zone de séchage placée en amont.

Ce dispositif de torréfaction peut ainsi être configuré pour porter la température de ladite ou desdites matières ainsi séchées à une température comprise entre 200°C et 300°C et plus préférentiellement entre 200°C et 250°C.

Une troisième zone dite de pyrolyse comporte un dispositif de pyrolyse configuré pour réaliser la pyrolyse de la ou des matières provenant de la zone dite de torréfaction.

Ce dispositif de pyrolyse peut ainsi être configuré pour porter la température de ladite ou desdites des matières provenant de la zone dite de torréfaction, à une température comprise entre 400°C et 800°C.

Une quatrième zone dite de refroidissement du charbon produit, placée à l'extrémité inférieure du réacteur 1 vertical, assure le refroidissement du charbon produit de sorte qu'il sorte du réacteur à une température d'extraction.

Ce réacteur comporte un dispositif d'aspiration pour créer et maintenir une dépression dans la chambre de sorte à évacuer les gaz formés dans le réacteur par une ouverture dite d'extraction. De préférence, ce dispositif d'aspiration est placée à à mi-hauteur du réacteur.

La charge introduite dans ce réacteur peut être traitée au préalable de son introduction de manière à la mettre en adéquation avec les spécifications du réacteur, tel que ses dimensions maximales ou son humidité.

Notamment, ces spécifications prévoient d'utiliser une charge avec une humidité qui doit être ramenée à 15% maximum en poids, de préférence comprise entre 10% en poids et 15% en poids, car le taux d'humidité de la charge a une influence sur le rendement du réacteur.

Elles prévoient encore le traitement de bûches de bois présentant des dimensions maximales, longueur de 25 cm et épaisseur de 10 cm, de préférence une longueur de 20 cm et une épaisseur de 10 cm.

De manière préférentielle, chaque matière ligno-cellulosique pourra être choisie dans le groupe comprenant du bois de feuillus tel que le bois de chêne, le bois de hêtre, le bois de charme, le bois de frêne, ..., du bois de conifères tel que le pin, l'épicéa, le douglas, ... ou encore du bois de recyclage et des mélanges de ces bois.

Le bois séché, les bûches, est alimenté par un skip de chargement dans la partie supérieure du réacteur. La partie supérieure du réacteur est équipée de deux portes de chargement : une porte à battant et une porte à guillotine, ce système de portes définissant entre ces portes un sas d'introduction de la ou des matières ligno-cellulosiques.

Le niveau de chargement est contrôlé par un indicateur de niveau placé dans la partie supérieure du réacteur.

Une fois le charbon de bois refroidi, ce dernier est déchargé par un système de portes comprenant une porte à guillotine et une porte à battant, ce système de portes définissant entre ces portes un sas d'évacuation du charbon.

Le charbon de bois ainsi déchargé est acheminé par un tapis 4 transporteur vers une unité 5 de tamisage avant d'être conditionné, par exemple, dans un container 6 à charbon.

Ce réacteur comporte également une ouverture à son extrémité inférieure, dite ouverture de réinjection, placée dans la paroi périphérique du réacteur, et reliée à un circuit de réinjection 11-13 d'au moins une partie des gaz formés dans le réacteur après traitement.

Ces gaz formés dans le réacteur sortent par l'ouverture dite d'extraction à une température d'environ 600 °C.

Le circuit de réinjection comprend une installation de fourniture d'eau chaude comportant un circuit thermodynamique comprenant trois condenseurs 11 d'échange de chaleur avec une source chaude pour le transfert de chaleur à un circuit d'eau chaude, ainsi qu'un échangeur évaporateur associé à une source froide.

Cette source chaude comprend un circuit dans lequel circule au moins une partie des gaz formés dans le réacteur et provenant directement du réacteur.

Le circuit d'eau chaude est un circuit dans lequel circule une eau refroidie en amont de ces condenseurs 11, cette eau étant chauffée lors du transfert de chaleur en vue d'apporter des calories au niveau d'un point d'utilisation, ici un séchoir (non représenté) pour sécher la ou les matières ligno-cellulosiques avant leur introduction dans le réacteur 1.

La source froide comprend pour sa part un dispositif aéro-réfrigérant pourvu de plusieurs ventilateurs aptes à faire circuler de l'air ambiant entre des tubes dans lesquels circule un fluide à refroidir.

Ce dispositif aéro-réfrigérant, connu en soi, comporte un échangeur de chaleur formé de faisceaux de tubes. Ces tubes sont disposés parallèles entre eux, et par exemple superposés de sorte à former deux parois d'une forme en V. Ainsi, chaque paroi forme un faisceau de circulation du fluide à refroidir pourvu d'une admission du fluide à refroidir et d'une sortie du fluide refroidi. Le dispositif aéro-réfrigérant comporte une pompe (non représentée) assurant la circulation du fluide entre les admissions et les sorties. Le dispositif aéro-réfrigérant comporte en outre un capteur de température apte à mesurer la température du fluide en sortie.

Ce circuit de réinjection comprend également un dispositif de filtration 13 configuré pour épurer ladite partie des gaz formés dans le réacteur 1 ainsi qu'un ventilateur 12 pour faire circuler ladite partie des gaz ainsi épurés vers ladite ouverture de réinjection.

L'installation comprend encore un bac 15 de récupération des huiles lourdes et légères ainsi que des liquides de condensation et un réservoir 16 d'eau enterré.

De manière très avantageuse, l'ouverture d'extraction des gaz formés dans le réacteur est également reliée à un circuit de valorisation d'une partie de ces gaz non adressés au circuit de réinjection.

Ce circuit de valorisation comporte un ensemble de quatre condenseurs 7 d'échange de chaleur avec une source chaude pour le transfert de chaleur à un circuit d'eau chaude et un échangeur évaporateur associé à une source froide.

Cette source chaude comprend ici un circuit dans lequel circule une partie des gaz formés dans le réacteur, et provenant directement de ce réacteur 1.

Chacun de ces condenseurs 7 d'échange de chaleur qui sont placés en série, est configuré pour séparer une famille de sous-produits solides, liquides ou condensables présents dans les gaz chauds. La séparation des goudrons d'une part, des huiles d'autre part, mais également de produits aqueux est ainsi obtenue.

Ces sous-produits ainsi récupérés peuvent être valorisés.

Ce circuit de valorisation comprend également un ventilateur 8 métallique pour assurer la circulation des gaz, un cyclone 9 et un bruleur 10.

L'installation comporte avantageusement une pluralité de sondes permettant de surveiller le traitement d'une charge d'une ou plusieurs matières lignocellulosiques au travers des différentes zones de l'installation et de paramétrer les différents programmes de fonctionnement de l'installation pour assurer un fonctionnement optimal de cette installation.

## Revendications

1. Installation de carbonisation pour la fabrication de charbon de bois à partir d'une ou plusieurs matières lignocellulosiques, **caractérisée en ce qu'**elle comprend un réacteur (1) vertical comportant une chambre à l'intérieur de laquelle sont délimitées des zones de traitement superposées, le réacteur définissant un chemin d'écoulement entre les deux extrémités de ladite chambre, le long duquel ladite ou lesdites matières ligno-cellulosiques subissent un processus de carbonisation au fur et à mesure qu'elles progressent au travers des différentes zones, une première desdites zones, dite de séchage, placée à l'extrémité supérieure dudit réacteur comportant un dispositif de séchage configuré pour porter la température de la ou des matières lignocellulosiques introduites dans le réacteur à une température de séchage, une deuxième zone dite de torréfaction étant configurée pour réaliser la torréfaction de la ou des matières séchées issues de la zone de séchage placée en amont, une troisième zone dite de pyrolyse étant configurée pour réaliser la pyrolyse de la ou des matières provenant de la zone dite de torréfaction, et une quatrième zone dite de refroidissement du charbon produit, placée à l'extrémité inférieure du réacteur (1) vertical,
- ledit réacteur comportant un dispositif d'aspiration pour maintenir ladite chambre en dépression de sorte à évacuer les gaz formés dans le réacteur par au moins une ouverture dite d'extraction,
- ledit réacteur comportant également une ouverture à son extrémité inférieure, dite ouverture de réinjection, reliée à un circuit de réinjection d'au moins une partie des gaz formés dans le réacteur et évacués par ladite au moins une ouverture d'extraction, ledit circuit de réinjection, étant configuré pour refroidir et abaisser la température de ces gaz à une température inférieure ou égale à 100°C, de préférence inférieure ou égale à 70°C et encore mieux inférieure ou égale à 50°C, avant leur réinjection pour participer au refroidissement du charbon produit jusqu'à une température d'extraction, et **en ce que**
- ledit réacteur comprenant une ou plusieurs ouvertures placées dans la paroi périphérique du réacteur, ladite installation comporte des moyens pour introduire de manière régulée de l'oxygène au travers de la ou de ces ouvertures dans le réacteur pour réaliser la pyrolyse.

2. Installation de carbonisation selon la revendication 1, **caractérisée en ce que** ledit réacteur comporte au moins un ventilateur pour faire circuler de l'air à contre-courant du chemin d'écoulement, cet air étant introduit par la ou lesdites ouvertures.

3. Installation de carbonisation selon la revendication 1 ou 2, **caractérisée en ce que** ledit circuit de réinjection comprend une installation de fourniture d'eau chaude comprenant un circuit thermodynamique comportant un ou plusieurs condenseurs (11) d'échange de chaleur avec une source chaude pour le transfert de chaleur à un circuit d'eau chaude, ladite source chaude comprenant un circuit dans lequel circule au moins une partie des gaz formés dans le réacteur et provenant directement du réacteur.

4. Installation de carbonisation selon l'une quelconque des revendications 1 à 3, **caractérisée en ce que** ledit circuit de réinjection comprend également au moins un dispositif de filtration (13) configuré pour épurer ladite au moins une partie des gaz formés dans le réacteur (1) ainsi qu'un ventilateur (12) pour faire circuler ladite au moins une partie des gaz ainsi épurés vers ladite ouverture de réinjection.

5. Installation selon l'une quelconque des revendications précédentes, **caractérisée en ce que** ledit circuit thermodynamique comprenant un échangeur évaporateur associé à une source froide, ladite source froide comprend un dispositif aéro-réfrigérant pourvu d'au moins un ventilateur.

6. Installation de carbonisation selon la revendication 5, **caractérisée en ce que** ledit dispositif aéro-réfrigérant comporte un dispositif de brumisation ou de projection de gouttelettes d'eau ainsi qu'un dispositif de désinfection bactériologique pour désinfecter le liquide à brumiser ou à projeter sous forme de gouttelettes.

7. Installation de carbonisation selon l'une quelconque des revendications précédentes, **caractérisée en ce que** ledit réacteur comprend un ou plusieurs dispositifs de mesure de pression, ledit dispositif d'aspiration comportant au moins un ventilateur à vitesse variable relié à ce ou ces dispositifs de mesure pour la régulation de la pression dans la chambre.

8. Installation de carbonisation selon l'une quelconque des revendications précédentes, **caractérisée en ce qu'**elle comporte un séchoir pour sécher en partie la ou les matières ligno-cellulosiques avant leur introduction dans ledit réacteur, une partie dudit circuit d'eau chaude passant par ledit séchoir.

9. Installation de carbonisation selon l'une quelconque des revendications précédentes, **caractérisée en ce que** ladite ouverture d'extraction est également reliée à un circuit de valorisation d'une partie desdits gaz formés dans ledit réacteur, ledit circuit de valorisation comportant un ou plusieurs condenseurs (7) d'échange de chaleur avec une source chaude pour le transfert de chaleur à un circuit d'eau chaude et un échangeur évaporateur associé à une source froide, ladite source chaude comprenant un circuit dans lequel circule une partie des gaz formés dans le réacteur, et provenant directement de ce réacteur, ledit circuit de valorisation comportant des moyens de récupération des produits liquides condensables présents dans ladite au moins une partie des gaz formés dans le réacteur.

10. Installation de carbonisation selon l'une quelconque des revendications précédentes, **caractérisée en ce que** ladite ouverture d'extraction est reliée à un circuit de valorisation d'une partie desdits gaz formés dans ledit réacteur après traitement, ledit circuit de valorisation comprenant :
- un moteur à gaz tel qu'un groupe électrogène à gaz, ou
- une chaudière (10) de combustion pour brûler ladite au moins une partie desdits gaz formés dans ledit réacteur, ladite chaudière (10) de combustion comprenant un port de sortie des gaz de combustion formés dans la chaudière, lequel est relié à un dispositif de récupération de chaleur.

11. Installation de carbonisation selon l'une quelconque des revendications précédentes, **caractérisée en ce qu'**elle comporte une vanne pilotée pour gérer les entrées d'air dans ladite zone de pyrolyse et/ou une vanne pilotée pour gérer les gaz.

12. Installation de carbonisation selon l'une quelconque des revendications précédentes, **caractérisée en ce que** ledit réacteur comporte un sas d'introduction de la ou les matières lignocellulosiques et un sas d'évacuation du charbon produit, ainsi qu'un dispositif de contrôle pour ouvrir en alternance lesdits sas.

13. Procédé de carbonisation en continue d'une ou plusieurs matières lignocellulosiques pour former du charbon dans lequel
- on introduit ladite ou lesdites matières lignocellulosiques dans un réacteur (1) vertical comportant une chambre à l'intérieur de laquelle sont délimitées des zones de traitement superposées, le réacteur définissant un chemin d'écoulement entre les deux extrémités de ladite chambre, le long duquel ladite ou lesdites matières ligno-cellulosiques subissent un processus de carbonisation au fur et à mesure qu'elles progressent au travers des différentes zones, une première desdites zones, dite de séchage, placée à l'extrémité supérieure dudit réacteur comportant un dispositif de séchage configuré pour porter la température de la ou des matières lignocellulosiques introduites dans le réacteur à une température de séchage, une deuxième zone dite de torréfaction étant configurée pour réaliser la torréfaction de la ou des matières séchées issues de la zone de séchage placée en amont, une troisième zone dite de pyrolyse étant configurée pour réaliser la pyrolyse de la ou des matières provenant de la zone dite de torréfaction, et une quatrième zone dite de refroidissement du charbon produit, placée à l'extrémité inférieure du réacteur (1) vertical,
- on régule la pression dans le réacteur pour maintenir ladite chambre en dépression,
- les gaz formés dans le réacteur étant évacués par au moins une ouverture d'extraction, on récupère lesdits gaz, on abaisse leur température à une température inférieure ou égale à 100°C, de préférence inférieure ou égale à 70°C et encore mieux inférieure ou égale à 50°C, et on les réinjecte dans la partie inférieure dudit réacteur pour participer au refroidissement du charbon produit de sorte à amener ce dernier à une température d'extraction, et en ce que
- ledit réacteur comportant une ou plusieurs ouvertures placées dans la paroi périphérique du réacteur, la pyrolyse est réalisée par un apport régulé d'oxygène.

14. Procédé de carbonisation selon la revendication précédente, **caractérisé en ce qu'**on injecte de l'air dans la zone de pyrolyse au travers de chaque ouverture en faisant circuler cet air à contre-courant du chemin d'écoulement au moyen d'au moins un ventilateur.

15. Procédé de carbonisation selon la revendication 13 ou 14, **caractérisé en ce qu'**on analyse la teneur en carbone du charbon produit et on ajuste la dépression générée dans le réacteur et/ou la température de pyrolyse en fonction de la teneur en carbone du charbon produit.
